# EUROPEAN PATENT SPECIFICATION

(11) **EP 4 044 006 B1**
(45) Date of publication and mention of the grant of the patent: **06.08.2025**
(21) Application number: 21196503.3
(22) Date of filing: 14.09.2021
(51) Int. Cl.: G06F 3/0362, G06F 3/039

(54) **KNOB DEVICE APPLICABLE TO TOUCH PANEL**
KNOPFVORRICHTUNG ZUR VERWENDUNG MIT EINEM TOUCH PANEL
DISPOSITIF DE BOUTON APPLICABLE À UN PANNEAU TACTILE

(30) Priority: 16.02.2021 US 202117177169
(43) Date of publication of application: 17.08.2022
(73) Proprietor: Himax Technologies Limited, Tainan City 74148 (TW)
(72) Inventor: SU, Chun-Jen, 74148 Tainan City (TW); CHUANG, Chun-Kai, 74148 Tainan City (TW); HSU, Heng-An, 74148 Tainan City (TW); WU, Wai-Pan, 74148 Tainan City (TW); TSAI, Cheng-Hung, 74148 Tainan City (TW)
(74) Representative: Hoefer & Partner Patentanwälte mbB

(56) References cited:
- WO-A1-2020/246077
- US-A1- 2014 042 004

## Description

### Field of the Invention

The present invention is related to a user interface (Ul) mechanism design, and in particular, to a knob device applicable to a touch panel. More particularly, the present invention relates to a knob device according to the pre-characterizing part of independent claim 1. Such a knob device is shown in document WO 2020/246077 A1.

### Background of the Invention

Document US 2014/0042004 A1 discloses a knob device comprising an element that is placed in a central hole of the knob device and enables the generation of a touch and press event of the knob device.

Knob devices are often used in general electronic apparatus, such as the knob for volume adjustment on an audio player, the knob for frequency adjustment on a radio and the knob for air conditioning/air volume adjustment on a car console, where many of these electronic apparatuses are equipped with a touch panel. Therefore, how to integrate the knob device and the touch panel to assist user in control has become an issue. In some traditional methods, the glass of the touch panel has holes on which the knobs are mounted. However, digging holes in the glass has disadvantages such as complicated steps, high cost and reduced glass strength. In some other traditional methods, the touch pad is installed in the knob and then directly mounted on the touch panel, and the function of the knob is achieved by touch effect of the touch pad on the touch panel. For example, when a user rotates the knob, a finger and the touch pad form a loop with the touch panel, such that a cell of the touch panel touched by the touch pad sends a touch signal. According to touch signals of different cells of the touch panel, the angle of rotation of the knob can be captured. However, certain problems may occur. For example, the resolution of the touch panel may be insufficient when the knob is small. For another example, when the touch pad of the knob is located between two touch panel cells, it is difficult to determine its position. Therefore, there is a need for a novel method and associated architecture to improve the resolution of rotation of the knob on the touch panel for solving the problems without introducing any side effect or in a way that is less likely to introduce a side effect.

### Summary of the Invention

This in mind, the present invention aims at providing a knob device applicable to a touch panel, in order to solve the above-mentioned problems.

This is achieved by a knob device according to independent claim 1. The dependent claims pertain to corresponding further developments and improvements.

As will be seen more clearly from the detailed description following below, the disclosed knob device is applicable to a touch panel. The knob device comprises a knob cover, a plurality of sensing pads and a rotation sensing element. The plurality of sensing pads are fixedly arranged on the touch panel. A gap is form between two sensing pads. The plurality of sensing pads and gaps are distributed in a ring around a center of an orthographic projection of the knob cover. The rotation sensing element is connected to the knob cover. When the knob cover is turned to be rotated, the rotation sensing element is rotated synchronously. When a user touches the knob device and the rotation sensing element overlaps one of the plurality of sensing pads, the touch panel generates a sensing signal in response to a location of the rotation sensing element.

### Brief Description of the Drawings

In the following, the invention is further illustrated by way of example, taking reference to the accompanying drawings thereof:
FIG. 1 is a diagram of a knob device arranged on a touch panel according to an embodiment of the present invention;
FIG. 2 is an exploded view illustrating the knob device arranged on the touch panel according to an embodiment of the present invention;
FIG. 3 is a cross-sectional view illustrating the knob device arranged on the touch panel according to an embodiment of the present
   invention;
FIG. 4 is a top view illustrating the knob device arranged on the touch panel according to an embodiment of the present invention; and
FIG. 5 is a top view illustrating a plurality of sensing pads distributed in a ring around a center of an orthographic projection of the knob cover according to an embodiment of the present invention.

### Detailed Description

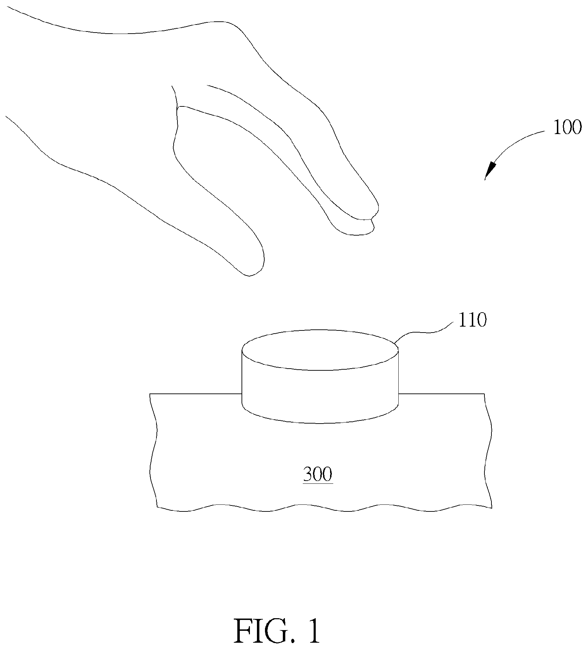

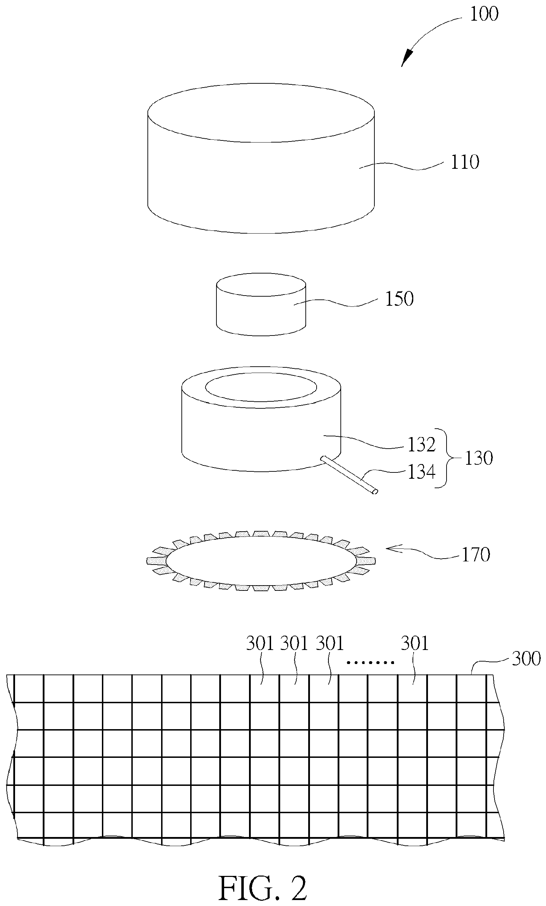

Please refer to FIG. 1 in conjunction with FIG. 2. FIG. 1 is a diagram of a knob device 100 arranged on a touch panel 300 according to an embodiment of the present invention. FIG. 2 is an exploded view illustrating the knob device 100 arranged on the touch panel 300 according to an embodiment of the present invention. As shown in FIG.1, the knob device 100 comprises a knob cover 110 arranged on the touch panel 300. When a user operates the knob device 100 by contacting the knob cover 110, the knob cover 110 forms a conductive path. This path allows the user's finger touching the knob device 100 to be connected to the touch panel 300 through the conductive path, which is equivalent to allowing the user to indirectly control the touch panel 300. In other words, when the user touches the knob cover 110 of the knob device 100, the touch panel 300 generates a sensing signal in response to a loop formed by the touch panel 300, the knob device 100 and the user. Furthermore, when the user rotates or presses the knob cover 110 of the knob device 100, the touch panel 300 generates different sensing signals in response to the movement and location of the knob device 100. As shown in FIG. 2, the knob device 100 comprises a rotation sensing element 130, a pressing sensing element 150 and a plurality of sensing pads 170 fixedly arranged on the touch panel. When the knob cover 110 is rotated, the rotation sensing element 130 is rotated synchronously. The plurality of sensing pads 170 do not change locations while the rotation sensing element 130 is rotating. In the present embodiment, the rotation sensing element 130 comprises a base 132 and a pin 134 arranged on the base 132, and the base 132 is connected to the knob cover 110, but the present invention is not limited thereto. In some embodiments, the pin 134 is arranged on the knob cover 110, and the base 132 is omitted. The plurality of sensing pads 170 are separated from each other by gaps. The plurality of sensing pads 170 and gaps are distributed in a ring around a center of an orthographic projection of the knob cover 110, where the orthographic projection of the knob cover 110 may be on a two-dimensional (2D) plane parallel with the touch panel 300. In addition, the touch panel 300 has multiple touch panel cells 301 arranged in a matrix format. When the user touches the knob cover 110 and the pin 134 of the rotation sensing element 130 overlaps one of the plurality of sensing pads 170 (e.g., the rotation sensing element 130 may abut against or get close to one of the plurality of sensing pads 170), the touch panel cell(s) 301 under the one of the plurality of sensing pads 170 generate sensing signal (s) in response to a location of the rotation sensing element 130. For example, based on the sensing signal (s) output from the touch panel cell(s) 301, the touch panel 300 generates a rotation sensing signal in response to the user touching and rotating knob cover 110 of the knob device 100. In the present embodiment, the pin 134 is arranged above the plurality of sensing pads 170, but the present invention is not limited thereto. In some other embodiments, the pin 134 is arranged between the plurality of sensing pads 170 and the touch panel 300.

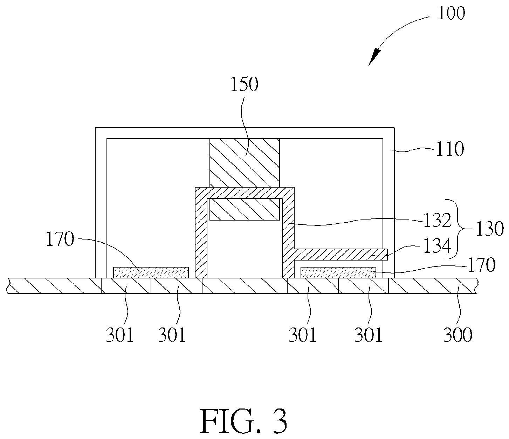

Please refer to FIG. 3. FIG. 3 is a cross-sectional view illustrating the knob device 100 arranged on the touch panel 300 according to an embodiment of the present invention. As shown in FIG. 3, the plurality of sensing pads 170 are fixedly arranged above the touch panel 300, and abut against to the touch panel 300. The pressing sensing element 150 may be connected to the knob cover 110 and/or the base 300. In the present embodiment, the pressing sensing element 150 is shown connected to the knob cover 110 for better understanding of technical features of the present invention. When the user touches and presses the knob cover 110 of the knob device 100, the pressing sensing element 150 abuts against or gets close to the touch panel 300, such that the touch panel cell (s) 301 under the pressing sensing element 150 generate pressing sensing signal(s) in response to the pressing sensing element 150. In other words, when a touch and press event of the knob device 100 occurs, the pressing touching element 150 abuts against or gets close to at least one of the plurality of sensing pads 170, and controls a pressing sensing signal of the touch panel 300. For example, based on the pressing sensing signal (s) output from the touch panel cell(s) 301, the touch panel 300 generates a pressing sensing signal in response to the user touching and pressing the knob cover 110 of the knob device 100.

Furthermore, when the user touches and rotates the knob cover 110 of the knob device 100, the touch panel cell (s) 301 under one sensing pad 170 which overlaps the pin 134 generate sensing signal(s) in response to a location of the rotation sensing element 130. It is noticed that, the knob cover 110 has a mechanism (e.g., a spring) that allows the knob cover 110 to be pressed down and rebound up when not being pressed. This mechanism is known to those skilled in the art, so the mechanism is not shown in figures, and further description is omitted here for simplicity.

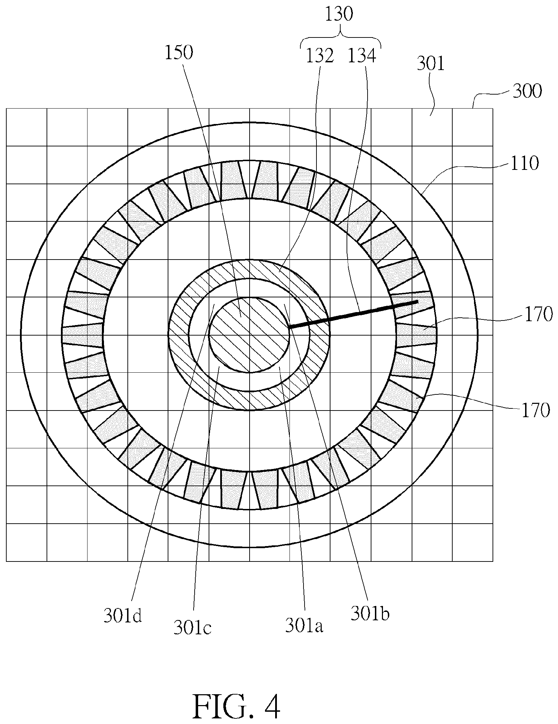

For example, please refer to FIG. 4. FIG. 4 is a top view illustrating the knob device 100 arranged on the touch panel 300 according to an embodiment of the present invention. Assume that when the user touches and presses the knob cover 110 of the knob device 100, four touch panel cells 301a, 301b, 301c and 301d are under the pressing sensing element 150. As shown in FIG. 4, the four touch panel cells 301a, 301b, 301c and 301d generate four sensing signals due to the pressing sensing element 150 directly above the touch panel cells 301a, 301b, 301c and 301d. When the knob cover 110 is rotated, the pressing touching element 150 is rotated synchronously. The touch panel 300 (particularly, a controller of the touch panel 300) can be pre-programed for generating the pressing sensing signal when receiving four sensing signals generated from four touch panel cells (e.g., touch panel cells 301a, 301b, 301c and 301d in this embodiment) . In addition, the pin 134 is connected to the knob cover 110, such that the pin 134 is synchronously rotated with the knob cover 110. The pin 134 is rotated to be moved from one sensing pad 170 to another sensing pad 170. When the user touches the knob device 100 and the pin 134 of the rotation sensing element 130 overlaps one of the plurality of sensing pads 170, the touch panel 300 generates a rotation sensing signal in response to a location of the rotation sensing element 130. In other words, when a touch and rotation event of the knob device 100 occurs and the pin 134 of the rotation sensing element 130 overlaps one of the plurality of sensing pads 170, a location of the rotation sensing element 130 controls a rotation sensing signal of the touch panel 300. As shown in the top view, all the sensing pads 170 may have the same shape and the same size, an orthographic projection of the pressing touching element 150 and the plurality of sensing pads 170 do not overlap, the pressing touching element 150 and the rotation sensing element 130 do not overlap. In the present embodiment, all the sensing pads 170 are located in the orthographic projection of the knob cover 110, but the present invention is not limited thereto. In some embodiment, said each sensing pad 170 comprises a first part and a second part connected with the first part, the first part is located in the orthographic projection of the knob cover 110, and the second part is located outside of the orthographic projection of the knob cover 110.

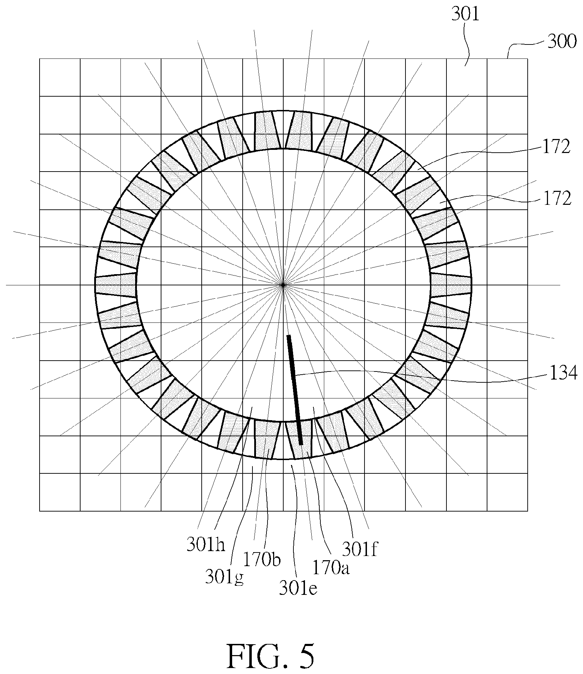

For example, please refer to FIG. 5. FIG. 5 is a top view illustrating a plurality of sensing pads 170 distributed in a ring area around a center of an orthographic projection of the knob cover 110 according to an embodiment of the present invention. As shown in FIG. 5, the orthographic projection of the knob cover 110 is on the touch panel 300, a ring area is located around a center of the orthographic projection of the knob cover 110 (the knob cover 110 is not shown in FIG. 5 for simplicity), and a plurality of radiations are formed from the center of the orthographic projection of the knob cover 110. The plurality of radiations are separated by 12 degrees, and one sensing pad 170 is formed corresponding to one radiation in the ring area. In other words, the ring area around the center of the orthographic projection of the knob cover 110 is divided into a plurality of parts, and each sensing pad 170 is located in one of the plurality of parts of the ring area. As shown in the top view, all the sensing pads 170 may have the same shape and the same size, an orthographic projection of the pressing touching element 150 and the plurality of sensing pads 170 do not overlap, the pressing touching element 150 and the rotation sensing element 130 do not overlap, and an area of each of the sensing pads 170 is formed outside of an orthographic projection of the rotation sensing element 130.

In practice, the degrees between the plurality of radiations are set depending on the resolution of the rotation angle of the knob device 100. In the present embodiment, the degrees between the plurality of radiations are all 12 degrees, but the present invention is not limited thereto. In some embodiments, the degrees between the plurality of radiations may not be all the same. It is noticed that one gap 172 is formed between every two neighboring sensing pads 170 among the plurality of sensing pads 170. In other words, the plurality of sensing pads 170 are separated from each other.

Similarly, when the user touches the knob cover 110 of the knob device 100, two touch panel cells 301e and 301f are under a sensing pad 170a which overlaps the pin 134, such that the two touch panel cell 301e and 301f generate two sensing signals which represents that the knob device 100 is touched. If the user rotates the knob cover 110 of the knob device 100 clockwise, the pin 134 is moved to a position above a sensing pad 170b, such that two touch panel cells 301g and 301h are under the sensing pad 170b which overlaps the pin 134 and generate two sensing signals. The touch panel 300 (particularly, a controller of the touch panel 300) can be pre-programed for generating a rotation sensing signal which represents that the knob device 100 is rotated when firstly receiving two sensing signals generated from two touch panel cell (e.g., touch panel cells 301e and 301f in this embodiment) and then receiving two sensing signals generated from another touch panel cells (e.g., touch panel cells 301g and 301h in this embodiment). It is noticed that when the pin 134 is moved above one of the plurality of gaps 172, the touch panel cell(s) under the pin 134 does not generate any sensing signal, such that the location of the pin 134 and the rotation angel of the knob device 100 are not misjudged even at a position between two touch panel cells. Furthermore, the resolution of the rotation angle of the knob device 100 can be higher. In other words, when the touch and rotation event of the knob device occurs and the pin 134 of the rotation sensing element 130 does not overlap one of the plurality of sensing pads 170, the rotation sensing element 130 does not induce the rotation sensing signal of the touch panel 300.

In addition, the quantity and the shapes of sensing pads may have some variations to meet different requirements. Regarding specific touch panel cells under the sensing pads, the touch panel 300 (particularly, a controller of the touch panel 300) has to be pre-programed for generating a rotation sensing signal corresponding to the specific touch panel cells.

According to the above arrangements, each sensing pad 170 is formed in the ring area according to one radiation from the center of an orthographic projection of the knob cover 110 to cover specific touch panel cells, and the plurality of gaps 172 are formed between the sensing pads 170 to separate the sensing pads. The touch panel 300 generates sensing signal (s) only when the user touches the knob device 100 and moves the pin 134 to a location overlapping one of the plurality of sensing pads 170. Since the touch panel cell(s) under the pin 134 at a location not overlapping any of the plurality of sensing pads 170 does not generate any sensing signal, the touch panel 300 does not misjudge the location of the pin 134, such that the resolution of the rotation angle of the knob device 100 is improved.

## Claims

1. A knob device (100), applicable to a touch panel (300), the knob device (100) comprising:
a knob cover (110);
a plurality of sensing pads (170), fixedly arranged on the touch panel (300), wherein the plurality of sensing pads (170) and a plurality of gaps (172) are distributed in a ring area around a center of an orthographic projection of the knob cover (110), and one of the plurality of gaps (172) is formed between every two neighboring sensing pads (170) among the plurality of sensing pads (170); and
a rotation sensing element (130), connected to the knob cover (110), wherein when the knob cover (110) is rotated, the rotation sensing element (130) is rotated synchronously;
**characterized in that**
when a touch and rotation event of the knob device (100) occurs, the rotation sensing element (130) moves in such a way that it overlaps either only one of the plurality of sensing pads (170), or only one of the plurality of sensing pads (170) and only one of the plurality of gaps (172), or only one of the plurality of gaps (172),
wherein when the rotation sensing element (130) overlaps one of the plurality of sensing pads (170) in response to the touch and rotation event of the knob device (100), a location of the rotation sensing element (130) controls a rotation sensing signal of the touch panel (300), and when the rotation sensing element (130) overlaps only one of the plurality of gaps (172) in response to the touch and rotation event of the knob device (100), the rotation sensing element (130) does not induce the rotation sensing signal of the touch panel (300).

2. The knob device (100) of claim 1, wherein the rotation sensing element (130) is arranged between the knob cover (110) and the plurality of sensing pads (170), and the rotation sensing element (130) is located above the ring area of the plurality of sensing pads (170).

3. The knob device (100) of claim 1 or 2, wherein the ring area around the center of the orthographic projection of the knob cover (110) is divided into a plurality of parts, and each sensing pad (170) is located in one of the plurality of parts of the ring area.

4. The knob device (100) of any of claims 1 to 3, wherein all the sensing pads (170) have a same shape and a same size.

5. The knob device (100) of claim 1, wherein said each sensing pad (170) comprises a first part and a second part connected with the first part, the first part is located in the orthographic projection of the knob cover (110), and the second part is located outside of the orthographic projection of the knob cover (110).

6. The knob device (100) of any of claims 1 to 5, further comprising:
a pressing touching element (150), arranged between the knob cover (110) and the plurality of sensing pads (170) and connected to the knob cover (110);
wherein the pressing touching element (150) is located above the ring area of the plurality of sensing pads (170), and when a touch and press event of the knob device (100) occurs, the pressing touching element (150) abuts against or gets close to at least one of the plurality of sensing pads (170), and controls a pressing sensing signal of the touch panel (300).

7. The knob device (100) of claim 6, wherein an orthographic projection of the pressing touching element (150) and the plurality of sensing pads (170) do not overlap.

8. The knob device (100) of claim 6 or 7, wherein the pressing touching element (150) and the rotation sensing element (130) do not overlap.

9. The knob device (100) of any of claims 6 to 8, wherein when the knob cover (110) is rotated, the pressing touching element (150) is rotated synchronously.

## Patentansprüche

1. Knopfvorrichtung (100), die auf ein Touchpanel (300) anwendbar ist, wobei die Knopfvorrichtung (100) umfasst:
eine Knopfabdeckung (110);
eine Vielzahl von Erfassungspads (170), die fest auf dem Touchpanel (300) angeordnet sind, wobei die Vielzahl von Erfassungspads (170) und eine Vielzahl von Lücken (172) in einem Ringbereich um eine Mitte einer orthografischen Projektion der Knopfabdeckung (110) verteilt sind, und eine der Vielzahl von Lücken (172) zwischen jeweils zwei benachbarten Erfassungspads (170) aus der Vielzahl von Erfassungspads (170) gebildet ist; und
ein Rotationserfassungselement (130), das mit der Knopfabdeckung (110) verbunden ist, wobei, wenn die Knopfabdeckung (110) gedreht wird, das Rotationserfassungselement (130) synchron gedreht wird;
**dadurch gekennzeichnet, dass**
wenn ein Berührungs- und Rotationsereignis der Knopfvorrichtung (100) auftritt, sich das Rotationserfassungselement (130) derart bewegt, dass es entweder nur eines der Vielzahl von Erfassungspads (170) oder nur eines der Vielzahl von Erfassungspads (170) und nur eine der Vielzahl von Lücken (172) oder nur eine der Vielzahl von Lücken (172) überlappt,
wobei, wenn das Rotationserfassungselement (130) eines der Vielzahl von Erfassungspads (170) als Reaktion auf das Berührungs- und Rotationsereignis der Knopfvorrichtung (100) überlappt, eine Position des Rotationserfassungselements (130) ein Rotationserfassungssignal des Touchpanels (300) steuert, und wenn das Rotationserfassungselement (130) nur eine der Vielzahl von Lücken (172) als Reaktion auf das Berührungs- und Rotationsereignis der Knopfvorrichtung (100) überlappt, das Rotationserfassungselement (130) das Rotationserfassungssignal des Touchpanels (300) nicht hervorruft.

2. Knopfvorrichtung (100) nach Anspruch 1, wobei das Rotationserfassungselement (130) zwischen der Knopfabdeckung (110) und der Vielzahl von Erfassungspads (170) angeordnet ist, und das Rotationserfassungselement (130) über dem Ringbereich der Vielzahl von Erfassungspads (170) angeordnet ist.

3. Knopfvorrichtung (100) nach Anspruch 1 oder 2, wobei der Ringbereich um die Mitte der orthografischen Projektion der Knopfabdeckung (110) in eine Vielzahl von Teilen unterteilt ist, und jedes Erfassungspad (170) in einem der Vielzahl von Teilen des Ringbereichs angeordnet ist.

4. Knopfvorrichtung (100) nach einem der Ansprüche 1 bis 3, wobei alle Erfassungspads (170) eine gleiche Form und eine gleiche Größe aufweisen.

5. Knopfvorrichtung (100) nach Anspruch 1, wobei jedes Erfassungspad (170) einen ersten Teil und einen zweiten Teil umfasst, der mit dem ersten Teil verbunden ist, wobei der erste Teil in der orthografischen Projektion der Knopfabdeckung (110) angeordnet ist, und der zweite Teil außerhalb der orthografischen Projektion der Knopfabdeckung (110) angeordnet ist.

6. Knopfvorrichtung (100) nach einem der Ansprüche 1 bis 5, ferner umfassend:
ein Druckberührungselement (150), das zwischen der Knopfabdeckung (110) und der Vielzahl von Erfassungspads (170) angeordnet ist und mit der Knopfabdeckung (110) verbunden ist;
wobei das Druckberührungselement (150) über dem Ringbereich der Vielzahl von Erfassungspads (170) angeordnet ist, und wenn ein Berührungs- und Druckereignis der Knopfvorrichtung (100) auftritt, das Druckberührungselement (150) an mindestens einem der Vielzahl von Erfassungspads (170) anliegt oder sich diesem annähert, und ein Druckerfassungssignal des Touchpanels (300) steuert.

7. Knopfvorrichtung (100) nach Anspruch 6, wobei eine orthografische Projektion des Druckberührungselements (150) und der Vielzahl von Erfassungspads (170) nicht überlappen.

8. Knopfvorrichtung (100) nach Anspruch 6 oder 7, wobei das Druckberührungselement (150) und das Rotationserfassungselement (130) nicht überlappen.

9. Knopfvorrichtung (100) nach einem der Ansprüche 6 bis 8, wobei, wenn die Knopfabdeckung (110) gedreht wird, das Druckberührungselement (150) synchron gedreht wird.

## Revendications

1. Dispositif de bouton (100), applicable à un panneau tactile (300), le dispositif de bouton (100) comprenant :
un couvercle de bouton (110) ;
une pluralité de plots de détection (170), agencés de manière fixe sur le panneau tactile (300), dans lequel la pluralité de plots de détection (170) et une pluralité d'espaces (172) sont répartis dans une zone annulaire autour d'un centre d'une projection orthographique du couvercle de bouton (110), et l'un de la pluralité d'espaces (172) est formé entre chaque paire de plots de détection voisins (170) parmi la pluralité de plots de détection (170) ; et
un élément de détection de rotation (130), connecté au couvercle de bouton (110), dans lequel lorsque le couvercle de bouton (110) est tourné, l'élément de détection de rotation (130) est tourné de manière synchrone ;
**caractérisé en ce que**
lorsqu'un événement de toucher et de rotation du dispositif de bouton (100) se produit, l'élément de détection de rotation (130) se déplace de telle manière qu'il chevauche soit seulement l'un de la pluralité de plots de détection (170), soit seulement l'un de la pluralité de plots de détection (170) et seulement l'un de la pluralité d'espaces (172), soit seulement l'un de la pluralité d'espaces (172),
dans lequel lorsque l'élément de détection de rotation (130) chevauche l'un de la pluralité de plots de détection (170) en réponse à l'événement de toucher et de rotation du dispositif de bouton (100), un emplacement de l'élément de détection de rotation (130) commande un signal de détection de rotation du panneau tactile (300), et lorsque l'élément de détection de rotation (130) chevauche seulement l'un de la pluralité d'espaces (172) en réponse à l'événement de toucher et de rotation du dispositif de bouton (100), l'élément de détection de rotation (130) n'induit pas le signal de détection de rotation du panneau tactile (300).

2. Dispositif de bouton (100) selon la revendication 1, dans lequel l'élément de détection de rotation (130) est agencé entre le couvercle de bouton (110) et la pluralité de plots de détection (170), et l'élément de détection de rotation (130) est situé au-dessus de la zone annulaire de la pluralité de plots de détection (170).

3. Dispositif de bouton (100) selon la revendication 1 ou 2, dans lequel la zone annulaire autour du centre de la projection orthographique du couvercle de bouton (110) est divisée en une pluralité de parties, et chaque plot de détection (170) est situé dans l'une de la pluralité de parties de la zone annulaire.

4. Dispositif de bouton (100) selon l'une quelconque des revendications 1 à 3, dans lequel tous les plots de détection (170) ont une même forme et une même taille.

5. Dispositif de bouton (100) selon la revendication 1, dans lequel ledit chaque plot de détection (170) comprend une première partie et une seconde partie reliée à la première partie, la première partie est située dans la projection orthographique du couvercle de bouton (110), et la seconde partie est située à l'extérieur de la projection orthographique du couvercle de bouton (110).

6. Dispositif de bouton (100) selon l'une quelconque des revendications 1 à 5, comprenant en outre :
un élément tactile de pression (150), agencé entre le couvercle de bouton (110) et la pluralité de plots de détection (170) et connecté au couvercle de bouton (110) ;
dans lequel l'élément tactile de pression (150) est situé au-dessus de la zone annulaire de la pluralité de plots de détection (170), et lorsqu'un événement de toucher et de pression du dispositif de bouton (100) se produit, l'élément tactile de pression (150) vient en butée contre ou se rapproche d'au moins l'un de la pluralité de plots de détection (170), et commande un signal de détection de pression du panneau tactile (300).

7. Dispositif de bouton (100) selon la revendication 6, dans lequel une projection orthographique de l'élément tactile de pression (150) et la pluralité de plots de détection (170) ne se chevauchent pas.

8. Dispositif de bouton (100) selon la revendication 6 ou 7, dans lequel l'élément tactile de pression (150) et l'élément de détection de rotation (130) ne se chevauchent pas.

9. Dispositif de bouton (100) selon l'une quelconque des revendications 6 à 8, dans lequel lorsque le couvercle de bouton (110) est tourné, l'élément tactile de pression (150) est tourné de manière synchrone.
